# EUROPEAN PATENT APPLICATION

(11) **EP 2 530 210 A1**
(43) Date of publication of application: **05.12.2012**
(21) Application number: 11168449.4
(22) Date of filing: 01.06.2011
(51) Int. Cl.: E03B 7/07, C02F 1/00

(54) **Water handling device**

(71) Applicant: Honeywell Technologies Sarl, 1180 Rolle (CH)
(72) Inventor: Habr, Martin, 64400 Brno (CZ); Arumugham, Thanigai Ravindran, 600116 Tamil Nadu (IN)
(74) Representative: Sturm, Christoph

(57) **Abstract**

Water handling device, especially drinking water handling device, comprising: a housing (11) providing an inlet opening (12) for water to be handled by the water handling device, an outlet opening (13) for water handled by the water handling device and a flow chamber (14) through which the water entering into the water handling device through said inlet opening (12) and passing out of said water handling device through said outlet opening (13) flows; at least one electrical or electronic component (19) providing a functionality or part- functionality of said water handling device; an electrical power generating unit (20) comprising at least one water electrolysis cell (21) providing electrical power needed to operate at least one electrical or electronic component (19).

## Description

The invention relates to a water handling device, especially to a drinking water handling device.

Water handling devices are also often called water fittings or water taps. Water handling devices for the handling of drinking water are also often called potable water products. Such a water handling device or potable water product can be e.g. a water pressure regulator, a water backflow preventer, a water valve, a water pressure reducing valve or a water filter.

Water handling devices known from prior art comprise a housing providing an inlet opening for water to be handled by the water handling device, an outlet opening for water handled by the water handling device and a flow chamber through which the water entering into the water handling device through said inlet opening and passing out of said water handling device through said outlet opening flows. In case of a water filter the flow chamber is provided by filter bowl and a sieve unit positioned within said filter bowl, whereby said sieve unit separates the flow chamber in a first sub-chamber for unfiltered water and a second sub-chamber for filtered water. Unfiltered water to be handled, namely to be filtered, by the water filter enters into the water filter through the inlet opening of the housing, flows from said inlet opening into the first sub-chamber, flows from the first sub-chamber through the sieve unit into the second sub-chamber, and flows from the second sub-chamber through the outlet opening out of the water filter.

Water handling devices known from prior art comprise further comprise at least one electrical or electronic component providing a functionality or part-functionality of said water handling device. Such an electrical or electronic component can be a microprocessor, an actuator, a sensor or a display. Such electrical or electronic components require electrical power for their operation.

Water handling devices known from prior art provide the electrical power for the operation of the or each electrical or electronic component either by connecting the water handling device through cables to an electrical power network or by providing batteries. The connection of water handling devices to an electrical power network by cables is of disadvantage because of the required cabling. Providing batteries is also of disadvantage because such batteries need to be replaced from time to time. Further on, the use of batteries is of disadvantage because of ecological reasons.

Against this background, a novel water handling device is provided which requires no cabling to an electrical power network and no batteries for the operation of its electrical or electronic components. According to the present invention, the water handling device comprises an electrical power generating unit comprising at least one water electrolysis cell providing electrical power needed to operate at least one electrical or electronic component.

According to a preferred embodiment of the present invention, the or each water electrolysis cell of said electrical power generating unit comprises an anode electrode made preferably from a magnesium material and a cathode electrode preferably made from a carbon material, whereby said electrodes are positioned with said flow chamber in such a way that the water flow is directed from the anode electrode to the cathode electrode. Such a design of the water handling device is very beneficial and allows the generation of an electrical power level greater than 1.3 Volts at water flow rates in the range of 6 to 7 m³ per hour under load of the electrical or electronic component.

Preferably, said electrodes are positioned directly in the water to be handled by the water handling device and/or the water handled by the water handling device flowing through said flow chamber. With this deign no separate containers for the electrodes are required.

According to a preferred embodiment of the present invention, the water handling device is a water filter, whereby the flow chamber of the housing of said water filter is provided by a filter bowl and a sieve unit positioned within said filter bowl, whereby said sieve unit separates the flow chamber in a first sub-chamber for unfiltered water and a second sub-chamber for filtered water, whereby the anode electrode of the respective electrolysis cell is positioned within the first sub-chamber for the unfiltered water, and whereby the cathode electrode of the respective electrolysis cell is positioned within the second sub-chamber for the filtered water. This allows a very beneficial integration of the electrical power generating unit in a water filter. There is no risk that generated hydrogen bubbles will settle on walls of the filter bowl, the sieve unit and the electrodes. Further on, the filtration properties of the water filter are not reduced.

Preferred developments of the invention are provided by the dependent claims and the description which follows. Exemplary embodiments are explained in more detail on the basis of the drawing, in which:
- Figure 1: shows a cross sectional view through a water handling device, namely thorough a drinking water filter, according to an embodiment of the invention;
- Figure 2: show another cross sectional view through the water handling device, namely thorough the drinking water filter, in the direction II-II of Figure 1.

The present invention relates to a water handling device. Such water handling devices are also often called water fittings or water taps.

Water handling devices for the handling of drinking water are also often called potable water products.

Such a water handling device or potable water product can be e.g. a water pressure regulator, a water backflow preventer, a water valve, a water pressure reducing valve or a water filter.

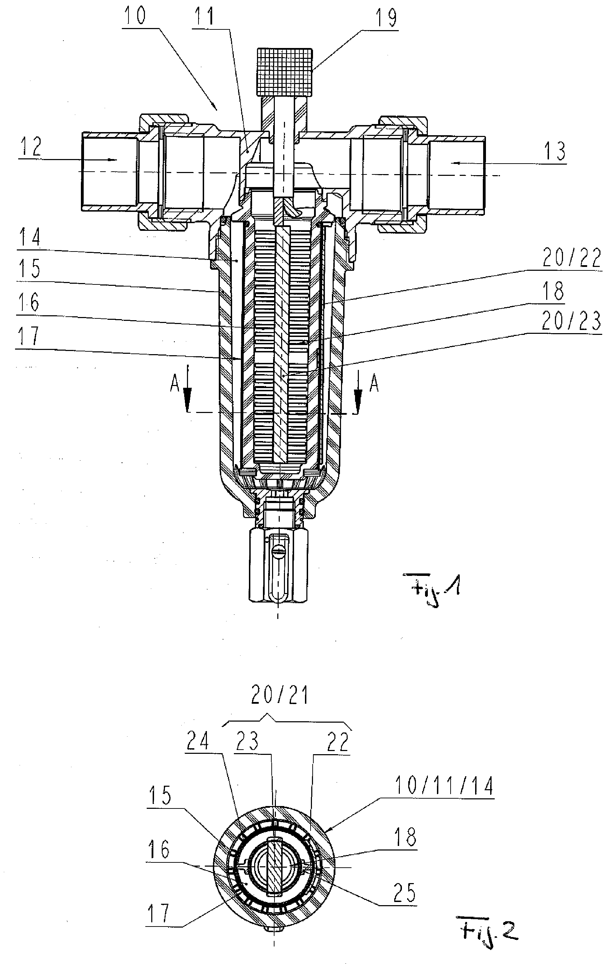

The invention is described below with reference to Figures 1 and 2 showing a potable water filter 10. It should be noted that the invention can also be used in other water handling devices like e.g. water backflow preventers.

The water filter 10 shown in Figures 1 and 2 comprises a housing 11 providing an inlet opening 12 for water to be handled, namely filtered, by the water filter 10, an outlet opening 13 for water handled by the water filter 10 and a flow chamber 14 through which the water entering into the water filter 10 through said inlet opening 12 and passing out of said water filter 10 through said outlet opening 13 flows. The flow chamber 14 is provided by filter bowl 15 and a sieve unit 16 positioned within said filter bowl 15. Said sieve unit 16 separates the flow chamber 14 in a first sub-chamber 17 for unfiltered water and a second sub-chamber 18 for filtered water. Unfiltered Water to be handled, namely to be filtered, by the water filter 10 enters into the water filter 10 thorough the inlet opening 12 of the housing 11, flows from said inlet opening 12 into the first sub-chamber 17, flows from the first sub-chamber 17 through the sieve unit 16 into the second sub-chamber 18, and flows from the second sub-chamber 18 through the outlet opening 13 of the housing 11 out of the water filter 10.

The water filter 10 shown in Figures 1 and 2 further comprises at least one electrical or electronic component 19 providing a functionality or part-functionality of said water filter 10. Such an electrical or electronic component 19 can be a microprocessor, an actuator, a sensor or a display. Such an electrical or electronic component 19 requires electrical power for operation.

According to the present invention, the water filter 10 comprises an electrical power generating unit 20 comprising at least one water electrolysis cell 21 providing electrical power needed to operate at least one electrical or electronic component 19 of the water filter 10. The water filter 10 requires no cabling to an electrical power network and no batteries for the operation of its electrical or electronic component(s) 19.

In the shown embodiment the electrical power generating unit 20 of the water filter 10 comprises a single water electrolysis cell 21. It should be noted that it is also possible that electrical power generating unit 20 comprises more than one water electrolysis cell being connected in series.

According to a preferred embodiment of the present invention, the water electrolysis cell 21 of the electrical power generating unit 20 of the shown water filter 10 comprises an anode electrode 22 made preferably from a magnesium material and a cathode electrode 23 preferably made from a carbon material.

Said electrodes 22, 23 are positioned with said flow chamber 14 in such a way that the water flow is directed from the anode electrode 22 to the cathode electrode 23. Such a design of the water filter 10 is very beneficial and allows the generation of an electrical power level greater than 1.3 Volts at water flow rates in the range of 6 to 7 m³ per hour under load of the electrical or electronic component 19.

In the shown embodiment, the anode electrode 22 of the water electrolysis cell 21 is positioned within the first sub-chamber 17 for the unfiltered water and the cathode electrode 23 of the water electrolysis cell 21 is positioned within the second sub-chamber 18 for the filtered water. Said electrodes 22, 23 are positioned directly in the water to be filtered by the water filter 10 and the water filtered by the water filter 10.

The anode electrode 22 is positioned directly in the water to be filtered, namely within the unfiltered water flowing through the first sub-chamber 17.

The cathode electrode 23 is positioned directly in the within the filtered water flowing through the second sub-chamber 18.

The sieve unit 16 comprises a filter sieve 24 and a cartridge 25 carrying said filter sieve 24. Said cartridge 25 further carries the cathode electrode 23 of the electrolysis cell 21. The filter bowl 15 carries the anode electrode 22 of the respective electrolysis cell 21. Said cartridge 25 and filter bowl 15 are made from a material having electrical isolating properties so that the same can directly carry the respective electrode 22, 23 of the water electrolysis cell 21. Said cartridge 25 is preferably made from a plastic material. Said filter bowl 15 is preferably made from glass. The filter sieve 24 is usually made from a metallic material.

As mention above, the electrical power generated by the water electrolysis cell 21 of the electrical power generating unit 20 is used to operate at least one electrical or electronic component 19 of the water filter 10. Said electrical or electronic component 19 can be a display like a LED display or Flip Dot display Said electrical or electronic component 19 can also be a RFID tag used as memory. Further on, said electrical or electronic component 19 can be sensor, actuator or microprocessor.

It is possible to provide the electrical power generated by the water electrolysis cell 21 of the electrical power generating unit 20 to a DC/DC converter and to boost the same to higher electrical voltage or electrical current levels.

### List of reference signs

- 10: water handling device / water filter
- 11: housing
- 12: inlet opening
- 13: outlet opening
- 14: flow chamber
- 15: filter bowl
- 16: sieve unit
- 17: first sub-chamber
- 18: second sub-chamber
- 19: electrical or electronic component
- 20: electrical power generating unit
- 21: water electrolysis cell
- 22: anode electrode
- 23: cathode electrode
- 24: filter sieve
- 25: cartridge

## Claims

1. Water handling device, especially drinking water handling device, comprising:
a housing (11) providing an inlet opening (12) for water to be handled by the water handling device, an outlet opening (13) for water handled by the water handling device and a flow chamber (14) through which the water entering into the water handling device through said inlet opening (12) and passing out of said water handling device through said outlet opening (13) flows;
at least one electrical or electronic component (19) providing a functionality or part- functionality of said water handling device;
**characterized by**
an electrical power generating unit (20) comprising at least one water electrolysis cell (21) providing electrical power needed to operate at least one electrical or electronic component (19).

2. Water handling device as claimed in claim 1, **characterized in that** the or each water electrolysis cell (21) of said electrical power generating unit (20) comprises an anode electrode (22) preferably made from a magnesium material and a cathode electrode (23) made preferably from a carbon material, whereby said electrodes (22, 23) are positioned with said flow chamber (14) in such a way that the water flow is directed from the anode electrode (22) to the cathode electrode (23).

3. Water handling device as claimed in claim 2, **characterized in that** said electrodes (22, 23) are positioned directly in the water to be handled by the water handling device and/or the water handled by the water handling device flowing through said flow chamber (14).

4. Water handling device as claimed in one of claim 1 to 3, **characterized in that** an electrical power generating unit (20) comprises a single water electrolysis cell (21).

5. Water handling device as claimed in one of claims 2 to 4, **characterized in that** the same is a water filter, whereby the flow chamber (14) of the housing (11) of said water filter is provided by filter bowl (15) and a sieve unit (16) positioned within said filter bowl (14), whereby said sieve unit (16) separates the flow chamber (14) in a first sub-chamber (17) for unfiltered water and a second sub-chamber (18) for filtered water, whereby the anode electrode (22) of the respective electrolysis cell (21) is positioned within the first sub-chamber (17) for the unfiltered water, and whereby the cathode electrode (23) of the respective electrolysis cell (21) is positioned within the second sub-chamber (18) for the filtered water.

6. Water handling device as claimed in claim 5, **characterized in that** said sieve unit (16) comprises a filter sieve (24) and a cartridge (25) carrying said filter sieve (24), whereby said cartridge (25) further carries the cathode electrode (23) of the respective electrolysis cell (21).

7. Water handling device as claimed in claim 5 or 6, **characterized in that** the filter bowl (15) carries the anode electrode (22) of the respective electrolysis cell (21).

8. Water handling device as claimed in one of claims 5 to 7, **characterized in that** said filter sieve (24) is made from a metallic material.

9. Water handling device as claimed in one of claims 5 to 8, **characterized in that** said cartridge (25) and filter bowl (15) are made from a material having electrical isolating properties.
